Europäisches Patentamt

European Patent Office

Office européen des brevets

(11) Veröffentlichungsnummer: **0 397 144**
**A1**

(12) **EUROPÄISCHE PATENTANMELDUNG**

(21) Anmeldenummer: **90108732.0**

(22) Anmeldetag: **09.05.90**

(51) Int. Cl.⁵: **H04J 3/06, H03M 9/00**

(30) Priorität: **08.07.89 DE 3922482**
**12.05.89 US 351723**

(43) Veröffentlichungstag der Anmeldung:
**14.11.90 Patentblatt 90/46**

(84) Benannte Vertragsstaaten:
**AT BE CH DE DK ES FR GB GR IT LI NL SE**

(71) Anmelder: **Standard Elektrik Lorenz**
**Aktiengesellschaft**
**Lorenzstrasse 10**
**D-7000 Stuttgart 40(DE)**

(84) **DE**

Anmelder: **ALCATEL N.V.**
**Strawinskylaan 537 (World Trade Center)**
**NL-1077 XX Amsterdam(NL)**

(84) **BE CH DK ES FR GB GR IT LI NL SE AT**

(72) Erfinder: **Turban, Karl-Albert**
**Brennerstrasse 57**
**D-7016 Gerlingen(DE)**

(74) Vertreter: **Kugler, Hermann, Dipl.-Phys. et al**
**Standard Elektrik Lorenz AG Patent- und**
**Lizenzwesen Postfach 30 09 29**
**D-7000 Stuttgart 30(DE)**

(54) **Schaltungsanordnung zur wortweisen Seriell-Parallel-Wandlung.**

(57) Bei Serien-Parallel-Wandlern, die die Aufgabe haben, eine wortweise strukturierte Eingangsbitfolge unter Berücksichtigung dieser Wortstruktur parallel zu wandeln, ist es üblich, den eigentlichen Serien-Parallel-Wandler durch eine Synchronisierschaltung so zu synchronisieren, daß sein Arbeitstakt dem Takt, mit dem die Wortanfänge der in der Eingangsbitfolge enthaltenen Wörter auftreten, gleich ist.

Im Gegensatz hierzu arbeitet bei der vorliegenden Schaltungsanordnung der Serien-Parallel-Wandler (1) unsynchronisiert d.h. mit einem beliebigen Synchronisationsversatz gegenüber den Wortanfängen in der Eingangs-Bitfolge, und es ist ihm eine Schaltung (3,4,5) nachgeschaltet, die, entsprechend dem Versatz der Synchronisation, den eine Synchronisierschaltung (2) erkennt, die vom Serien-Parallel-Wandler (1) ausgegebenen n-Bit-Bitgruppen $(B_1, B_2, B_3)$ so umordnet, daß nacheinander vollständige Wörter $(W_1, W_2, W_3)$ an den n Ausgängen der Schaltungsanordnung ausgegeben werden. Statt einer Regelschaltung für den Serien-Parallel-Wandler (1) ist also eine Steuerung einer diesem nachgeschalteten Schaltung vorhanden.

## Schaltungsanordnung zur wortweisen Seriell-Parallel-Wandlung

Die Erfindung betrifft eine Schaltungsanordnung nach dem Oberbegriff des Patentanspruchs 1.

Eine solche Schaltungsanordnung ist beispielsweise bekannt aus der DE-A1 35 01 674.

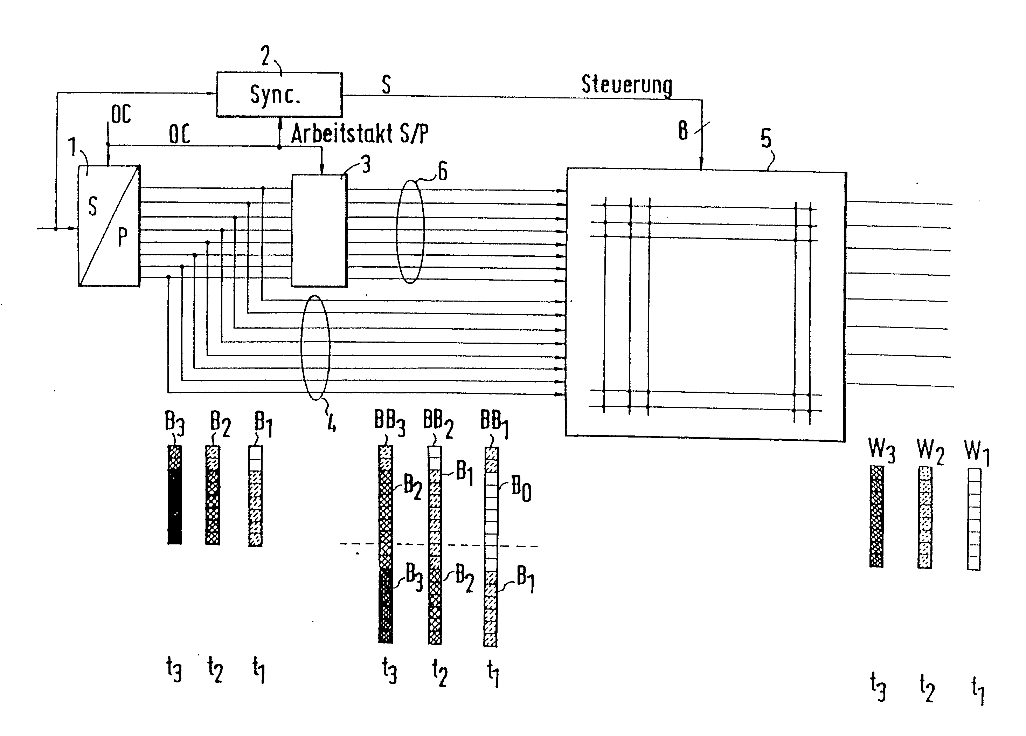

Die dort gezeigte Schaltungsanordnung enthält neben einem Serien-Parallel-Wandler (70 in Fig.2) eine Synchronisierschaltung, die den Serien-Parallel-Wandler synchronisiert, damit er seine aus aufeinanderfolgenden n-Bit-Wörtern bestehende Eingangsbitfolge wortweise, d.h. jeweils ein gesamtes Wort an seinen parallelen Ausgängen ausgebend, seriell-parallel wandelt. Die Synchronisierschaltung überprüft anhand der vom Serien-Parallel-Wandler ausgegebenen Wörter eine Coderegel, der die aufeinanderfolgend empfangenen n-Bit-Wörter unterliegen, und verschiebt die Arbeitstaktphase des Serien-Parallel-Wandlers beispielsweise um eine Taktperiode des Bittakts der Eingangs-Bitfolge, gegebenenfalls mehrmals hintereinander, bis sie keine Codefehler mehr in den vom Serien-Parallel-Wandler ausgegebenen n-Bit-Bitgruppen feststellt, was bedeutet, daß diese Bitgruppen tatsächlich die n-Bit-Wörter sind.

Die bekannte Anordnung synchronisiert also ihren Serien-Parallel-Wandler, und zwar durch eine Regelschleife. Die für eine solche Regelung typische Eigenschaft, daß Schaltungsteile auf ihnen vorgeschaltete Schaltungsteile zurückwirken, ist ungünstig, wenn die zusammenwirkenden Schaltungsteile in unterschiedlicher Technologie, entsprechend der Geschwindigkeit der in ihnen stattfindenden Verarbeitung, realisiert werden sollen. Insbesondere ist hier zu berücksichtigen, daß in neuen Kommunikationssystemen die Bitfolgefrequenzen der seriell zu übertragenden Bitfolgen zwischen 150 und 600 Mbit/s liegen oder noch höher sein werden und damit eine realitv teuere TTL- oder ECL- Technologie erfordern. Andererseits ist es wünschenswert, aus Kostengründen die Technologie CMOS anwenden zu können.

Es ist daher die Aufgabe der Erfindung, eine Schaltungsanordnung der eingangs genannten Art anzugeben, die eine Realisierung von verschiedenen Schaltungsteilen in unterschiedlicher Technologie eher als die bekannte Schaltungsanordnung erlaubt.

Die Aufgabe wird wie im Patentanspruch 1 angegeben gelöst. Weiterbildungen ergeben sich aus den Unteransprüchen.

Die Erfindung wird nun anhand der einzigen Zeichnung näher erläutert. Diese zeigt im oberen Teil ein Blockschaltbild der erfindungsgemäßen Schaltungsanordnung und im unteren Teil die aufeinanderfolgend an verschiedenen Stellen der Schaltungsanordnung auftretenden Bitgruppen.

Am Eingang der Schaltungsanordnung erscheint eine Bitfolge in serieller Form mit einem bestimmten Bittakt, z.B. 150 Mbit/s. Diese Bitfolge enthält nacheinander Wörter mit jeweils n, z.B. 8, Bits. Die Schaltungsanordnung hat die Aufgabe, diese Bitfolge wortweise seriell-parallel zu wandeln, d.h. so, daß an n Ausgängen nacheinander die Bits eines ersten Wortes, dann die eines zweiten Wortes usw. erscheinen, jeweils in Parallelform. Für das folgende Beispiel wird durchgehend davon ausgegegangen, daß n gleich 8 ist.

Die Schaltungsanordnung enthält einen Serien-Parallel-Wandler 1, in den die Eingangs-Bitfolge seriell eingegeben wird. Eine nicht gezeigte Schaltung zur Taktableitung leitet aus der Eingangs-Bitfolge deren Bittakt ab und teilt diesen mit einer beliebigen Phase durch 8. Mit diesem durch 8 geteilten Bittakt als Arbeitstakt wird der Serien-Parallel-Wandler 1 betrieben. Der Arbeitstakt ist in der Zeichnung mit OC bezeichnet. Somit setzt der Serien-Parallel-Wandler 1 seine Eingangs-Bitfolge in 8-Bit-Bitgruppen um, die er im Takt des Arbeitstakts OC nacheinander in Parallelform an seinen Ausgängen ausgibt.

Da die Taktphase des Arbeitstakts OC des Serien-Parallel-Wandlers 1 zwar fest, jedoch beliebig ist und nicht mit der Taktphase des Takts, in dem die Wortgrenzen der in der Eingangs-Bitfolge enthaltenen Wörter erscheinen, synchronisiert ist, arbeitet der Serien-Parallel-Wandler 1 im allgemeinen mit einem Synchronisationsversatz, so daß die von ihm am Ausgang ausgegebenen n-Bit-Bitgruppen nicht gleich den nacheinander in der Eingangs-Bitfolge enthaltenen n-Bit-Wörtern sind, sondern Bits aus verschiedenen Wörtern enthalten. Die Zeichnung zeigt dies in einem Beispiel, wobei mehrere vom Serien-Parallel-Wandler 1 nacheinander ausgegebene Bitgruppen $B_1$, $B_2$, $B_3$ jeweils als 8 zusammengehörende Kästchen dargestellt und die zu einem Wort gehörenden Bits jeweils mit einem bestimmten Muster symbolisiert sind. In dem gezeigten Beispiel enthält eine erste Bitgruppe $B_1$ zwei Bits (leere Kästchen), die als letzte eines Worts $W_1$ empfangen worden sind und 6 Bits (gepunktete Kästchen) eines darauffolgend eingegangenen Worts $W_2$. Dessen zwei restlichen Bits sind in einer Bitgruppe $B_2$ enthalten, die eine Arbeitstaktperiode später an den Ausgängen des Serien-Parallel-Wandlers 1 erscheint und die als weitere Bits die sechs ersten Bits eines Worts $W_3$ enthält (karierte Kästchen). Die zwei restlichen Bits des Worts $W_3$ sind in einer wiederum eine Arbeitstaktperiode später erscheinenden Bitgruppe $B_3$ enthalten (karierte Kästchen), die als weitere Bits die sechs ersten Bits (dunkelkarierte Kästchen), eines nächsten Worts $W_4$ enthält. Die Zeitpunkte, zu denen diese Bitgruppen an den Ausgängen des Serien-Parallel-Wandlers 1 erscheinen, sind mit $t_1$, $t_2$ und $t_3$ angegeben. Sie liegen, wie bereits erwähnt, in Abständen von einer Taktperiode des Arbeitstakts OC des Serien-Parallel-Wandlers 1.

In diesem Beispiel beträgt also der Synchronisationsversatz 2 Bittaktperioden. (Wäre die Phase des Arbeitstakts um zwei Bittaktperioden früher, so enthielten die Bitgruppen $B_1$ bis $B_3$ und die nicht dargestellten nachfolgenden jeweils sämtliche Bits eines Wortes).

Erfindungsgemäß wird der Serien-Parallel-Wandler nicht auf die Wortgrenzen der Eingangs-Bitfolge synchronisiert (im Gegensatz zu der eingangs genannten bekannten Anordnung), sondern er behält seinen Synchronisationsversatz, der 1 bis 7 Bits betragen kann, bei, und es ist ihm eine Schaltung nachgeschaltet, die, gesteuert von dem Synchronisationsversatz, dafür sorgt, daß die in der Eingangs-Bitfolge enthaltenen Bits wortweise in paralleler Form ausgegeben werden.

Zum Erkennen des Synchronisationsversatzes ist eine Synchronisierschaltung (2) vorhanden. Diese empfängt den Arbeitstakt OC des Serien-Parallel-Wandlers und die Eingangsbitfolge. In hier nicht interessierender Weise erkennt sie in der Eingangsbitfolge die Wortgrenzen der aufeinanderfolgenden n-Bit-Wörter, vergleicht die Phase des durch die Wortgrenzen gegebenen Takts mit der Phase des Arbeitstakts und stellt fest, daß der Arbeitstakt in der Phase z.B. um zwei Bitperioden verzögert ist. Dementsprechend gibt sie ein diesem Synchronisationsversatz anzeigendes Steuersignal S an ihrem Ausgang aus.

Die durch dieses Steuersignal gesteuerte Schaltung könnte irgendeine Speicherschaltung sein, in die die vom Serien-Parallel-Wandler 1 nacheinander ausgegebenen n-Bit-Bitgruppen wie $B_1$ bis $B_3$ usw. zur Zwischenspeicherung eingegeben und, gesteuert entsprechend dem Synchronisationsversatz, so ausgegeben werden, daß an 8 parallelen Ausgängen jeweils 8 Bits eines einzigen Wortes in Parallelform erscheinen.

Als vorteilhafte Ausgestaltung der Erfindung wird statt eines solches Speichers eine einfachere Schaltung angegeben, die in der Zeichnung dargestellt ist. Diese Schaltung, deren Aufgabe es ist, die vom Serien-Parallel-Wandler 1 nacheinander ausgegebenen 8 Bit-Bitgruppen $B_1$, $B_2$, $B_3$ usw. so umzuordnen, daß nacheinander vollständige Wörter in Parallelform ausgegeben werden, enthält lediglich eine Verzögerungsschaltung 3, die jede der vom Serien-Parallel-Wandler nacheinander ausgegebenen Bitgruppen $B_i$ um eine Taktperiode des Arbeitstakt OC verzögert an ihren 8 Parallelausgängen 6 ausgibt, ferner eine Mehrfachleitung 4 (auch Busleitung genannt) aus 8 parallelen Leitungen, die jede vom Serien-Parallel-Wandler 1 ausgegebene Bitgruppe $B_i$ ohne Verzögerung in Parallelform bereitstellt, und eine Auswahlschaltung (5), die aus jeder Bitgruppe, die in Parallelform an den 16 Ausgängen 6 und 4 erscheint, einen bestimmten Teil, wie noch erläutert wird, als 8 Ausgangsbits ausgibt.

Die Wirkung dieser Schaltung ist in der Zeichnung veranschaulicht und ist leicht verständlich. Der aus der Verzögerungsschaltung 3 und den Leitungen 4 und 6 bestehende Schaltungsteil bildet aus jeweils zwei aufeinanderfolgend vom Serien-Parallel-Wandler 1 ausgegebenen Bitgruppen ein Wort mit der doppelten Bitanzahl, indem er einer ersten Bitgruppe die Bits einer zweiten Bitgruppe parallel hinzufügt.

Beispielsweise wird zu einem Zeitpunkt $t_2$ eine 16-Bit-Bitgruppe $BB_2$ gebildet. Diese enthält nebeneinander die Bits einer Bitgruppe $B_1$, die zu einem um eine Taktperiode des Arbeitstakts OC früher vom Serien-Parallel-Wandler 1 ausgegeben wurde, und die Bits der zum Zeitpunkt $t_2$ ausgegebenen Bitgruppe $B_2$. In gleicher Weise entstand zu einem Zeitpunkt $t_1$ eine Bitgruppe $BB_1$, die zusammengesetzt ist aus den Bits einer eine Taktperiode zuvor aufgetretenen Bitgruppe $B_0$ und den Bits der zum Zeitpunkt $t_1$ aufgetretenen Bitgruppe $B_1$, erstere in dem Teil oberhalb der gestrichelten Trennungslinie als Ausgangsbits der Verzögerungsschaltung 3, letztere unterhalb der gestrichelten Trennungslinie als Ausgangsbits des Serien-Parallel-Wandlers 1, die unverzögert von der Mehrfach-Leitung 4 ausgegeben werden. Ebenso erscheint zu einem späteren Zeitpunkt $t_3$ eine Bitgruppe $BB_3$, zusammengesetzt aus den Bitgruppen $B_2$ und $B_3$, was keiner weiteren Erläuterung mehr bedarf.

Wie man in der Zeichnung sieht, haben diese Bitgruppen $BB_i$ alle die Eigenschaft, daß sie ein vollständiges Wort enthalten, dessen Bits nebeneinanderliegen, und daß dieses Wort in allen Bitgruppen in denselben Bitpositionen steht, im Beispiel in den Positionen 3 bis 10, von oben nach unten gezählt.

Die nachfolgende Auswählschaltung 5 muß nun nur noch diejenigen 8 von ihren 16 Eingangsleitungen auf ihre 8 Ausgänge durchschalten, welche in Parallelform die Bits eineS vollständigen Wortes bereitstellen. Im gezeigten Beispiel sind dies die Leitungen Nr. 3 bis 10, wenn man die gesamten Leitungen von oben nach unten mit Nummern von 1 bis 16 numeriert. Werden diese Leitungen zu den Ausgängen durchgeschaltet, so erscheinen nacheinander zu Zeitpunkten $t_1$, $t_2$, $t_3$ usw. die Wörter $W_1$, $W_2$, $W_3$, die in den genannten Bitpositionen in den Bitgruppen $BB_1$, $BB_2$, $BB_3$ enthalten sind.

Die Auswählschaltung 5 ist eine einfache Gattermatrix zum Durchschalten von n aus 2n Eingangsleitungen auf n Ausgangsleitungen. Es ist dies eine 2n x n-Gattermatrix mit 2n Signaleingängen und n Steuereingängen, in deren Steuereingänge über eine n Bits breite Busleitung ein Steuerwort S auf n Steuereingänge eingegeben wird. Im gezeigten Beispiel ist dies ein Steuerwort, das z.B. an der dritten Bitposition eine 1 und an allen anderen Bitpositionen eine 0 hat, und die Gattermatrix funktioniert so, daß sie beim Anliegen dieses Worts an ihren Steuereingängen ihre Eingangsleitungen Nr. 3 bis 10 mit ihren acht Ausgangsleitungen verbindet.

Die Gattermatrix verursacht abgesehen von geringen Gatterlaufzeiten keinerlei Verzögerung der auszugebenden Wörter, und insgesamt hat die Schaltung den Vorteil, daß sie sofort, nachdem die SynchronisierSchaltung 2 den Synchronisationsversatz erkannt hat, die aufeinanderfolgenden Wörter in der richtigen Anordnung ausgibt. Die Verzögerung um eine Periode des Arbeitstakts OC, die ein Teil eines Wortes erfährt, bis der restliche Wortteil zur Verfügung steht, hat keine nachteilige Wirkung für die weitere Verarbeitung der parallelisierten Wörter. Auch die Synchronisierschaltung 2 erfordert zum Erzeugen des Steuersignals, nachdem der Synchronisationsversatz erkannt ist, keinen erheblichen Aufwand. Es ist eine einfache Logikschaltung, die im gezeigten Beispiel bei einem Synchronisationsversatz von zwei Bits ein 8-Bit-Wort ausgibt, das an der dritten Bitposition eine 1 und sonst nur 0-Bits hat.

Der Teil der Synchronisierschaltung, der in der Eingangs-Bitfolge die Wortgrenzen erkennt, kann eine bekannte Schaltung sein, die man zur Wortsynchronisation üblicherweise verwendet, z.B. eine Schaltung, die ein Rahmensynchronwort in der Eingangs-Bitfolge erkennt, wodurch die Wortgrenzen der in dem Rahmen übertragenen Wörter festgelegt sind.

Es ist nicht Voraussetzung, daß die Synchronisierschaltung 2 als Eingangssignal die seriell vorliegende Bitfolge empfängt. Sie kann auch die vom Serien-Parallel-Wandler 1 ausgegebene Folge von n-Bit-Bitgruppen auswerten und auf irgendeine hier nicht näher interessierende Weise darin die Wortgrenzen finden.

**Ansprüche**

1. Schaltungsanordnung, die eine aus aufeinanderfolgenden n-Bit-Wörtern bestehende Bitfolge wortweise seriell-parallel wandelt,
**dadurch gekennzeichnet,**
daß sie enthält:
- einen Serien-Parallel-Wandler (1), der mit beliebiger Taktphase die Eingangs-Bitfolge in n-Bit-Bitgruppen (Bi) umsetzt,
- eine Synchronisierschaltung (2), die die Wortgrenzen der Eingangs-Bitfolge erkennt und durch Vergleich der Wortgrenzen mit der Taktphase des Serien-Parallel-Wandlers (1) ein dessen Synchronisationsversatz anzeigendes Steuersignal (S) erzeugt, und
- eine Schaltung (3,4,5) die, gesteuert von dem Steuersignal (S) die vom Serien-Parallel-Wandler (1) ausgegebenen n-Bit-Bitgruppen (Bi) wortweise umordnet und die darin enthaltenen n-Bit-Wörter (Wi) parallel ausgibt.

2. Schaltungsanordnung nach Anspruch 1, dadurch gekennzeichnet, daß die Schaltung (3,4,5) zum Umordnen der vom Serien-Parallel-Wandler (1) ausgegebenen n-Bit-Bitgruppen (Bi) enthält:
- einen Schaltungsteil (3,4), der jeweils aus zwei aufeinanderfolgend vom Serien-Parallel-Wandler (1) ausgegebenen n-Bit-Bitgruppen (Bi) eine 2n-Bit-Bitgruppe (BBi) bildet, in der die Bits der zweiten (B2) von zwei aufeinanderfolgend von Serien-Parallel-Wandler (1) ausgegebenen n-Bit-Bitgruppen (B1,B2) den Bits der ersten (B1) parallel hinzugefügt sind,
- eine n-aus-2n-Auswählschaltung (5), in die jede 2n-Bit-Bitgruppe (BBi) parallel eingegeben wird und die, gesteuert von dem Steuersignal (S) einen bestimmten Teil von n nebeneinanderliegenden Eingängen auf ihren Ausgänge durchschaltet.

3. Schaltungsanordnung nach Anspruch 2, dadurch gekennzeichnet, daß der die 2n-Bit-Bitgruppen (BBi) bildende Schaltungsteil (3,4) enthält:
- eine Verzögerungsschaltung (3), die jede in Parallelform vom Serien-Parallel-Wandler (1) ausgegebene n-Bit-Bitgruppe (Bi) um eine Periode des Arbeitstakts (OC) des Serien-Parallel-Wandlers (1) verzögert an n parallelen Ausgängen (6) ausgibt, und
- eine Mehrfachleitung (4), die jede in Parallelform vom Serien-Parallel-Wandler (1) ausgegebene n-Bit-Bitgruppe (Bi) unverzögert ausgibt,
so daß ein an insgesamt 2n Ausgängen (6,4) des Schaltungsteils (3,4) eine 2n-Bit-Bitgruppe (BBi) in Parallelform ausgegeben wird, die in einem ersten Teil eine erste und in einem zweiten Teil eine zweite von zwei aufeinanderfolgend vom Serien-Parallel-Wandler (1) in Parallelform ausgegebenen n-Bit-Bitgruppen (Bi) enthält.

**Europäisches Patentamt**

**EUROPÄISCHER RECHERCHENBERICHT**

Nummer der Anmeldung

EP 90 10 8732

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 538 647 (J.-C. BILLY et al.) <br> * Ganzes Dokument * <br> --- | 1-3 | H 04 J 3/06 <br> H 03 M 9/00 |
| A | EP-A-0 191 890 (SIEMENS-ALBIS AG) <br> --- | | |
| A | EP-A-0 178 192 (SAT SOCIETE ANONYME DE TELECOMMUNICATIONS) <br> ----- | | |

**RECHERCHIERTE SACHGEBIETE (Int. Cl.5)**

H 04 J
H 03 M

Der vorliegende Recherchenbericht wurde für alle Patentansprüche erstellt

| Recherchenort | Abschlußdatum der Recherche | Prüfer |
|---|---|---|
| DEN HAAG | 11-08-1990 | SEGAERT P.A.O.M.P. |